# EUROPEAN PATENT APPLICATION

(11) **EP 4 368 851 A1**
(43) Date of publication of application: **15.05.2024**
(21) Application number: 22206959.3
(22) Date of filing: 11.11.2022
(51) Int. Cl.: F16D 55/226, F16D 65/18, F16D 66/00, F16D 121/04, F16D 121/06, F16D 123/00, F16D 121/14

(54) **DISC BRAKE**

(71) Applicant: Meritor Heavy Vehicle Braking Systems (UK) Limited, Cwmbran, Gwent NP44 3XU (GB)
(72) Inventor: Watkins, Rhys, Cwmbran, NP44 3XU (GB); Thomas, Paul A., Cwmbran, NP44 3XU (GB); Cleary, Sean, Cwmbran, NP44 3XU (GB)
(74) Representative: Whitfield, Jack Stephen

(57) **Abstract**

A hydraulic disc brake (10) for a vehicle. The disc brake (10) comprises a service brake arrangement (30) configured to actuate under hydraulic pressure to urge a brake pad (22, 24) towards a rotor (20) to apply the disc brake (10) during a braking operation; a parking brake arrangement (32) configured to urge the brake pad (22, 24) towards the rotor (20) to apply the disc brake during a parking operation, wherein the parking brake arrangement (32) has an applied condition and a released condition; and a parking brake indicator (90, 92) configured to indicate whether the parking brake arrangement (32) is in the applied condition or the released condition.

## Description

### FIELD OF THE INVENTION

The present invention relates to a disc brake for a vehicle, more specifically to a hydraulic service brake with an integrated parking brake.

### BACKGROUND OF THE INVENTION

In light-duty heavy vehicles, hydraulic brakes are typically used for the service brakes, often with integrated parking brakes. However, occasionally, issues can arise with the brakes. To diagnose such issues, it is typically necessary to remove the wheel or disassemble the brakes. The present invention seeks to overcome or at least mitigate the problems associated with the prior art.

### SUMMARY OF THE INVENTION

A hydraulic disc brake for a vehicle is provided. The disc brake includes a service brake arrangement configured to actuate under hydraulic pressure to urge a brake pad towards a rotor to apply the disc brake during a braking operation and a parking brake arrangement configured to urge the brake pad towards the rotor to apply the disc brake during a parking operation. The parking brake arrangement has an applied condition and a released condition. The disc brake also includes a parking brake indicator configured to indicate whether the parking brake arrangement is in the applied condition or the released condition.

The parking brake indicator allows issues with the hydraulic disc brake to be diagnosed by a visual inspection of the brake by a user.

The disc brake may comprise a caliper housing for locating the service brake arrangement and the parking brake arrangement. The parking brake indicator may be located on a rear side of the caliper housing, opposite to a front side of the caliper housing that faces the brake rotor.

Such a location is typically unobstructed when the brake is installed on a vehicle, so it is easy for the user to inspect the brake and see the parking brake indicator.

The caliper housing may comprise at least one bore to locate the parking brake mechanism and the parking brake indicator. In the released condition, the parking brake indicator may project from the bore.

It is easy for a user to determine whether the parking brake indicator is projecting from the bore or not. Therefore, this is a simple way to indicate whether the hydraulic brake is functioning correctly or not, as well as helping them to immediately diagnose any issues. For example, if the parking brake arrangement is supposed to be in the applied condition but the parking brake indicator is projecting from the bore, this could indicate that there is a problem with the parking brake arrangement. Conversely, if the parking brake arrangement is supposed to be in the released condition but the parking brake indicator does not project from the bore, this could indicate that there is a problem with the hydraulic system that releases the parking brake and the parking brake is still in the applied condition.

The parking brake arrangement may comprise a parking brake piston configured to urge the brake pad towards the rotor to apply the disc brake during a parking operation. The parking brake indicator may be the parking brake piston.

As no further components are required, having the parking brake indicator being the parking brake piston is simple and space saving.

The service piston may have a central longitudinal axis. The parking brake piston may be co-axial with the service piston.

As the parking brake piston is in line with the service piston, the overall packaging of the hydraulic disc brake can be minimised, enabling the brake to fit in smaller locations, for example on light electric vehicles.

The parking brake arrangement may further comprise a biasing arrangement configured to bias the parking brake piston in the direction of the brake pad when the parking brake arrangement is in the applied condition.

The parking brake arrangement may be configured to be moved to the released condition by hydraulic pressure.

The bore in the caliper housing may comprise a hydraulic fluid chamber. In the applied condition of the parking brake arrangement, the hydraulic fluid chamber may be substantially empty. In the released condition of the parking brake arrangement the hydraulic fluid chamber may be substantially filled with hydraulic fluid.

The parking brake arrangement can be simply controlled by adjusting the amount of hydraulic fluid in the hydraulic fluid chamber. If the hydraulic fluid chamber is empty, the biasing arrangement is free to urge the parking brake piston in the direction of the rotor during a parking operation. If the hydraulic fluid is introduced back into the hydraulic fluid chamber, the parking brake piston is moved away from the rotor and stays in this position until the hydraulic fluid is drained from the hydraulic fluid chamber again.

The parking piston may comprise a circumferential collar portion. A radial rotor-facing surface of the collar portion may partially define the hydraulic fluid chamber. The rotor-facing surface may be configured to be acted on by the hydraulic fluid. An opposite radial surface of the collar portion may face away from the rotor. The opposite radial surface may be configured to be in contact with the biasing arrangement.

The collar helps to define the hydraulic fluid chamber and increases the surface area of the parking piston that can be acted on by the biassing arrangement and hydraulic fluid to change the parking brake arrangement between the applied and released conditions.

The caliper housing may further comprise a cover plate at its rear side. The bore may pass through the cover plate. The parking brake piston may be substantially flush with the cover plate when it is in the applied condition.

The cover plate may have a substantially planar surface portion. The bore may pass through this portion.

This facilitates the user being able to quickly tell from visual inspection alone whether the parking brake piston is protruding or flush with the planar surface portion.

The parking brake piston may be at least partially surrounded by the biasing arrangement. The parking brake piston may comprise a shoulder portion engaged by the biasing arrangement.

The biasing arrangement may comprise a housing having a plurality of biasing elements. The biasing elements may be Belville washers.

The parking brake piston may have a shaft portion. The biasing elements may be located on the shaft portion. At least one of the biasing elements may engage the shoulder portion of the parking brake piston.

The parking brake arrangement may comprise an adjustment mechanism to account for wear of the rotor and brake pad. The adjustment mechanism may comprise an adjuster nut that is configured to contact the service piston. The adjuster nut may be extendable relative to an adjuster screw. The parking brake piston may be configured to, during the parking operation, engage the adjuster screw when released by the retaining arrangement, in order to transfer force from the biasing arrangement to the adjuster nut, which transfers the force to the service piston to apply the disc brake.

### BRIEF DESCRIPTION OF THE DRAWINGS

Embodiments of the invention will now be described with reference to the accompanying drawings, in which:
Figure 1 is a perspective view of a disc brake according to the invention;
Figure 2 is a top view of the disc brake of Figure 1;
Figure 3 is a perspective view of a caliper housing of the disc brake of Figure 1, when a parking brake arrangement is in a released condition;
Figure 4 is a cross-sectional view of the caliper housing of Figure 3, through the plane 4-4;
Figure 5 is a cross-sectional view of the caliper housing of Figure 3, through the plane 5-5;
Figure 6 is a perspective view a caliper housing of the disc brake of Figure 1, when a parking brake arrangement is in an applied condition;
Figure 7 is a cross-sectional view of the caliper housing of Figure 6, through the plane 7-7.

### DETAILED DESCRIPTION OF EMBODIMENT(S)

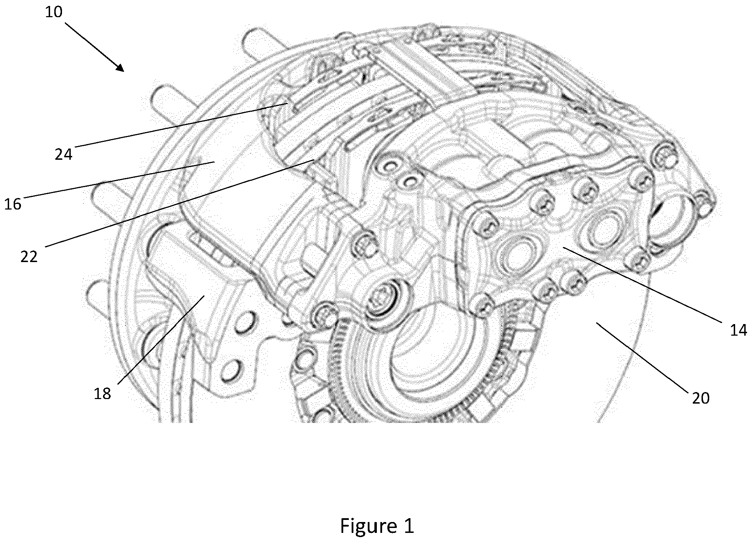

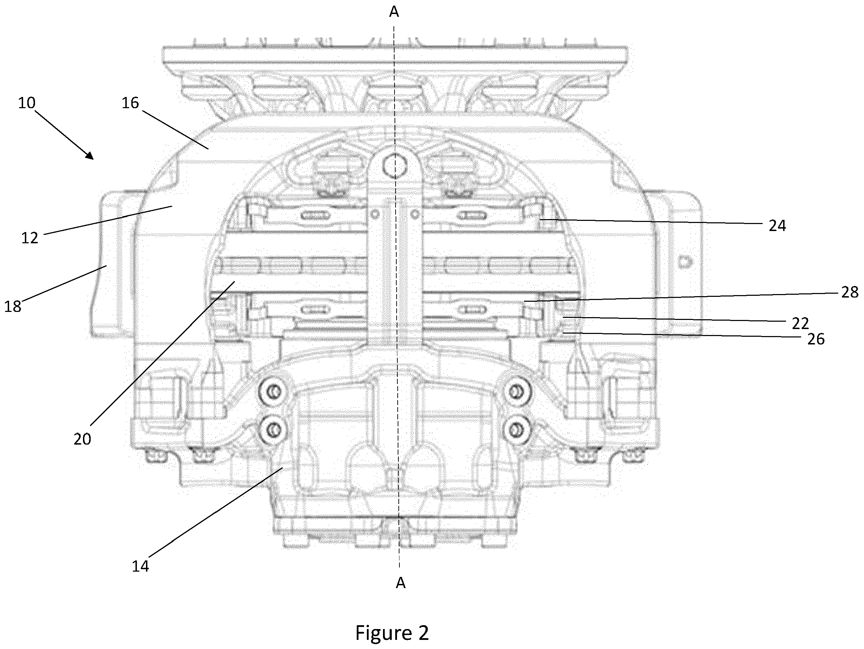

Looking at Figures 1 and 2, a disc brake for a heavy vehicle is indicated at 10. In this embodiment, the disc brake 10 is a hydraulic disc brake having a service brake arrangement 30 and a parking brake arrangement 32. As will be described in more detail below, the service brake arrangement 30 has the function of applying the disc brake 10 in a braking operation to slow or stop the vehicle and the parking brake arrangement 32 has the function of 'locking' the disc brake 10 in its applied position when the vehicle is parked. The parking brake arrangement 32 has an applied condition and a released condition. The disc brake 10 also has a parking brake indicator (described in more detail below), configured to indicate whether the parking brake arrangement is in the applied condition or the released condition. The parking brake indicator allows issues with the hydraulic disc brake to be diagnosed by a visual inspection of the brake by a user.

In this embodiment, the disc brake 10 is a dual-piston floating caliper disc brake. As can be seen from Figures 1 and 2, the disc brake 10 has a caliper 12 that slides on guide pins of a brake carrier 18 in a known manner. The brake carrier 18 is typically fixed to an axle at a wheel of a vehicle and extends over a rotor 20. Located on the brake carrier 18 at either side of the rotor 20 are a first brake pad 22 and a second brake pad 24. The centre of the rotor 20 defines a longitudinal axis A-A. The caliper 12 has a caliper housing 14 and a caliper bridge 16 that extends over the rotor.

Various orientations of the disc brake 10 are described. In particular, the directions inboard and outboard refer to the typical orientation of the disc brake 10 when fitted to a vehicle. In this orientation, the brake pad closest to the centre of the vehicle (the first brake pad 22 in this embodiment) is the brake pad directly actuated by an actuation mechanism and is also known as the inboard brake pad. The outboard brake pad is mounted to the caliper bridge 16 and is the second brake pad 24 in this embodiment. Thus, inboard can be equated with an actuating side of the disc brake 10, and outboard with a reaction side. The terms radial, circumferential, tangential and chordal describe orientations with respect to the axis of the rotor 20. The terms vertical and horizontal describe orientations with the disc brake 10 mounted uppermost on an axle, though it will be appreciated that in use such a disc brake 10 may adopt any axle orientation depending upon packaging requirements of the vehicle.

Each of the first and second brake pads 22, 24 have a backplate 26 that locates friction material 28. When the service brake arrangement 30 or the parking brake arrangement 32 are applied, the backplate 26 of the first brake pad 22 is engaged in order to bring the friction material 28 of the first brake pad 22 in contact with the rotor 20. This causes the caliper 12 to slide on the brake carrier 18 such that the contact between the caliper bridge 16 and the backplate 26 of the second brake pad 24 results in the friction material 28 of the second brake pad 24 also contacting the rotor 20. This clamping action reduces rotation of the rotor by friction, and causes slowing of the vehicle in the case of the service brake arrangement 30 or prevents rotation of the vehicle wheel in the case of the parking brake arrangement 32.

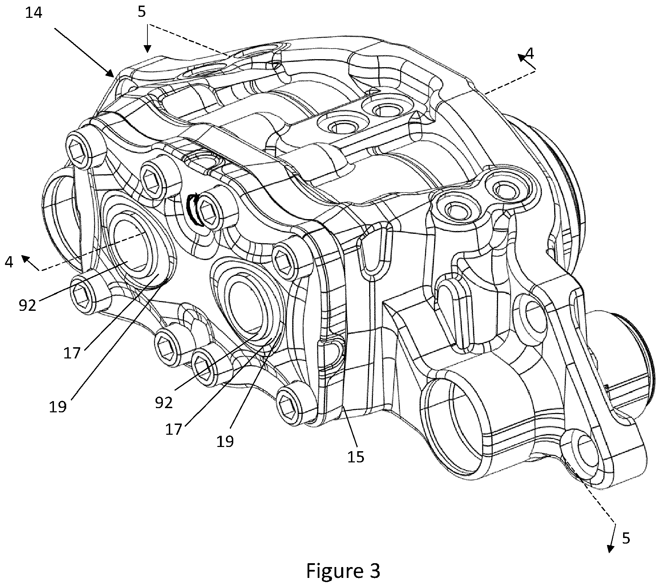

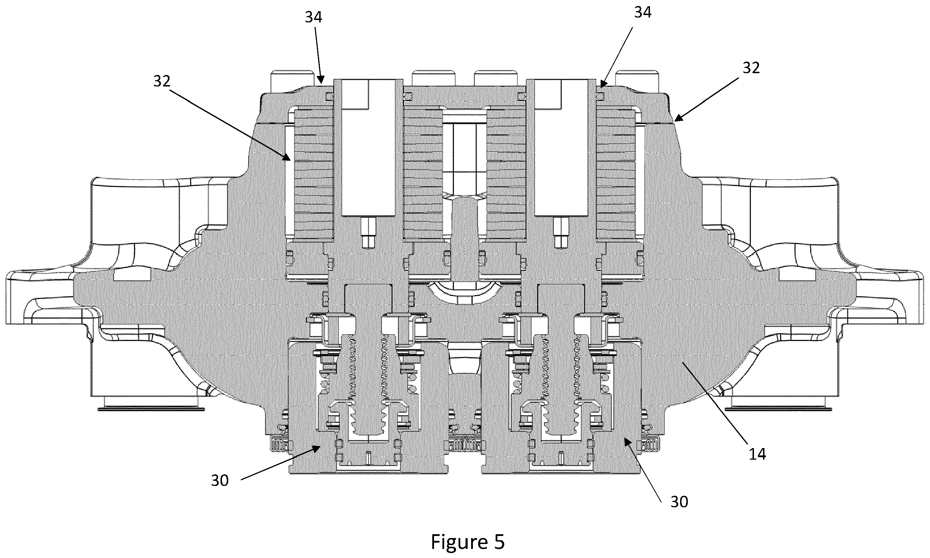

The caliper housing 15 is shown in more detail in Figures 3 to 8. In this embodiment, the caliper housing 14 includes two caliper bores 34. In this embodiment, the caliper bores 34 are machined cylindrical bores, located side-by-side and each including a service brake arrangement 30 and a parking brake arrangement 32. In this embodiment, each cylindrical bore 34 is separated into a service brake chamber 31 and a parking brake chamber 33 by a dividing wall 35. The dividing wall 35 has a central aperture 37 for locating a component of the parking brake arrangement 32 as described in more detail below.

Only one service brake arrangement 30 will be described in detail, but it will be appreciated that their function is identical. In this embodiment, there are two service brake arrangements 30, but in other embodiments, there could be only one, or more than two. For example, there could be two service brake arrangements 30 at the inboard side of the rotor and a further two service brake arrangements 30 at the outboard side of the rotor, for a total of four.

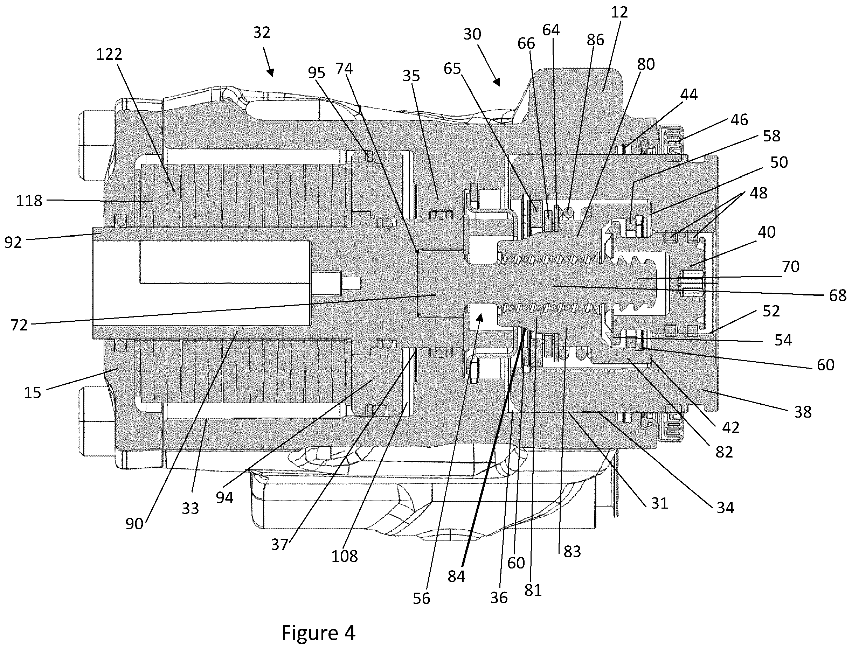

Looking at Figure 4, an outer service piston 38 is located in the caliper bore 34 and configured to slide within the caliper bore 34 under hydraulic pressure in order to engage the backplate 26 of the first brake pad 22 to urge it towards the rotor 20 to apply the disc brake 10.

Inboard of the outer service piston 38, the service brake chamber 31 of the caliper bore 34 defines a hydraulic chamber 36 having a hydraulic fluid inlet (not shown) configured to introduce hydraulic fluid into the hydraulic chamber 36 as required, to urge the outer service piston 38 in the outboard direction towards the rotor 20. During a braking operation, therefore, the service brake arrangement 30 is configured such that the outer service piston 38 actuates under hydraulic pressure to urge the first brake pad 22 towards the rotor 20 to apply the disc brake.

A primary piston seal 44 is arranged between the outer service piston 38 and the caliper bore 34. In this embodiment, the caliper bore 34 comprises a circumferential groove to locate the primary piston seal 44. The primary piston seal 44 helps to retain hydraulic fluid within the hydraulic chamber 36 as well as help retract the outer service piston 38 after a braking operation. A sealing boot 46 is also provided at an open end of the caliper bore 34, fixed to the caliper housing 14 and the outer service piston 38, to help prevent ingress of contaminants into the hydraulic chamber 36.

The outer service piston 38 is hollow and includes two bores of differing diameters. At its outboard end, the outer service piston 38 includes an outboard bore 52 that locates an inner service piston 40. Inboard of the outboard bore 52, is an inboard-facing recess 50 that has a greater diameter than the outboard bore 52 and locates an adjustment mechanism 56.

The inner service piston 40 can slide within the outboard bore 52. A circumferential outer surface of the inner service piston includes two grooves that each locate a secondary piston seal 48. Each secondary piston seal 48 acts between the inner service piston 40 and the outer service piston 38 to help retain hydraulic fluid within the hydraulic chamber 36.

An outboard surface of the inner service piston 40 is configured to engage the backplate 26 of the inboard brake pad 22. At an inboard end of the inner service piston 40 is a radially-outwardly extending flange portion 54.

The adjustment mechanism 56 includes an adjuster nut 80 and an adjuster screw 68 that can extend relative to one another. The adjuster screw 68 is elongate with a shaft portion 70 and an enlarged head portion 72 located at the inboard end of the shaft portion 70. In this embodiment, the head portion 72 has a hexagonal outer profile. In this embodiment, the shaft portion 70 includes a helical thread on a radially outer surface.

A parking piston 90 (described in more detail below) of the parking brake arrangement 32 has a recess 74 in an outboard facing surface. The recess 74 has an inner profile that corresponds to the outer profile of the head portion 72 of the adjuster screw 68 such that the adjuster screw 68 cannot rotate relative to the parking piston 90.

The adjuster nut 80 is located radially outwardly and at least partially surrounds the adjuster screw 68. An inboard portion of the adjuster nut 80 defines an adjuster nut sleeve portion 81. The adjuster nut sleeve portion 81 has a substantially similar internal diameter as the external diameter of the shaft portion 70 of the adjuster screw 68. A radially inner surface of the adjuster nut sleeve portion 81 has an internal helical thread that corresponds to the helical thread on the shaft portion 70 of the adjuster screw 68, such that the adjuster screw 68 can extend relative to the adjuster nut 80. Between the teeth of the corresponding threads is a backlash. In other words, there is a spacing between the teeth such that the adjuster screw 68 can move axially by a predetermined amount before it contacts the adjuster nut 80. This predetermined amount can be, for example, the desired clearance between the first brake pad 22 and the rotor 20.

Outboard of the adjuster nut sleeve portion 81 is an adjuster nut transition portion 84 that leads to an adjuster nut shoulder portion 83. The adjuster nut transition portion 84 has a greater outer diameter than the adjuster nut sleeve portion 81. The adjuster nut shoulder portion 83 has a greater outer diameter than the adjuster nut transition portion 84. Extending radially outwardly and axially outboard from the adjuster nut shoulder portion 83 is an adjuster nut flange portion 82. The adjuster nut flange portion 82 defines an outboard-facing recess in which the flange portion 54 of the inner service piston 40 is located. At the outboard end of the adjuster nut flange portion 82, a radially inner surface of the adjuster nut flange portion 82 includes a circumferentially extending groove that locates a circlip 60. The circlip 60 retains a low friction washer 58 between an outboard-facing surface of the flange portion 54 of the inner service piston 40 and the radially inner surface of the adjuster nut flange portion 82.

An outboard-facing surface of the adjuster nut flange portion 82 is located adjacent an inboard-facing surface of the outer service piston 38. As will be described in more detail below, during an adjustment operation, the outboard-facing surface of the adjuster nut flange portion 82 engages the inboard-facing surface of the outer service piston 38, such that a clutch face 42 is defined between the adjuster nut 80 and the outer service piston 38.

The adjuster nut flange portion 82 also includes a plurality of circumferentially distributed apertures, to enable hydraulic fluid to enter the area defined by the recess 50 of the inner service piston 40 and provide lubrication.

Located on the adjuster nut shoulder portion 83 is an adjuster nut spring 86 that acts on an inboard-facing radial surface of the adjuster nut flange portion 82 to urge it in the direction of the adjuster nut shoulder portion 83 and provide the clutch face 42. Inboard of the adjuster nut spring 86 and located on the adjuster nut transition portion 84 are a ball race 66, a first washer 64 and a second washer 65. The first washer 64 is located most outwardly and is engaged by the adjuster nut spring 86, providing a reaction force for the adjuster nut spring 86. Sandwiched between the second washer 65 and the first washer 64 is the ball race 66, which enables smooth rotation of the adjuster nut 80 within the outer service piston 38. A circlip 60 fixed in a groove of a radially inner surface of the outer service piston 38 retains the ball race 66, the first washer 64, the second washer 65 and the adjuster nut spring 86.

Located in the parking brake chamber 33 of the cylindrical bore 34 of the caliper housing 14 is the parking brake arrangement 32. The parking brake arrangement 32 includes a parking brake piston 90, a biasing arrangement 118 and a hydraulic chamber 108. The parking brake piston 90 is configured to actuate to urge the first brake pad 22 towards the rotor 20 to apply the disc brake 10 during a parking operation. The biasing arrangement 118 is configured to bias the parking brake piston 90 in the direction of the first brake pad 22.

The parking brake arrangement 32 has an applied condition and a released condition. In the applied condition, hydraulic fluid is evacuated from the hydraulic chamber 108 through an outlet (not shown) such that the hydraulic fluid chamber 108 is substantially empty of hydraulic fluid. As described in more detail below, as the hydraulic fluid chamber is substantially empty, there is no reaction force against the biasing arrangement 118, so the parking brake piston 90 is urged in the direction of the first brake pad 22.

In the released condition, hydraulic fluid has again been introduced into the hydraulic chamber 108 through an inlet (not shown) such that the hydraulic fluid chamber 108 is substantially full of hydraulic fluid. The filling of the hydraulic chamber 108 urges the parking piston 90 away from the direction of the first brake pad 22 and it is retained in a position by the hydraulic fluid in the hydraulic chamber 108 such that the parking brake piston 90 is not urging the first brake pad 22 towards the rotor 20.

During a parking operation, the hydraulic fluid in the hydraulic chamber 108 is released in order to enable the biasing arrangement 118 to change the condition of the parking brake arrangement from the released condition to the applied condition and apply the parking brake piston 90 to urge the first brake pad 22 towards the rotor 20.

In this embodiment, the parking brake piston 90 is co-axial with the outer service piston 38 and the inner service piston 40 about the longitudinal axis A-A (shown in Figure 2) that extends through the centre of the outer service piston 38 and the inner service piston 40. The biasing arrangement 118 is also arranged around the axis A-A. More specifically, in this embodiment, the parking brake piston 90 is surrounded by the biasing arrangement 118.

The parking brake piston 90 is generally cylindrical and elongate. In this embodiment, the parking brake piston 90 includes a shaft portion 92 and a collar portion 94. The collar portion 94 has an increased diameter compared to the shaft portion 92. In this embodiment, the collar portion 94 is a separate component that is located on the shaft portion 92, but in other embodiments, the collar portion 94 and shaft portion 92 could be monolithic and integrally formed. The parking brake piston 90 is arranged such that the collar portion 94 can slide within the parking brake chamber 33 of the caliper housing 14. The radially outer surface of the collar portion 94 includes a groove 95 that can locate a seal element (not shown) to inhibit egress of hydraulic fluid from the hydraulic chamber 108. The shaft portion 92 extends in an inboard direction from the collar portion 94 of the parking brake piston 90.

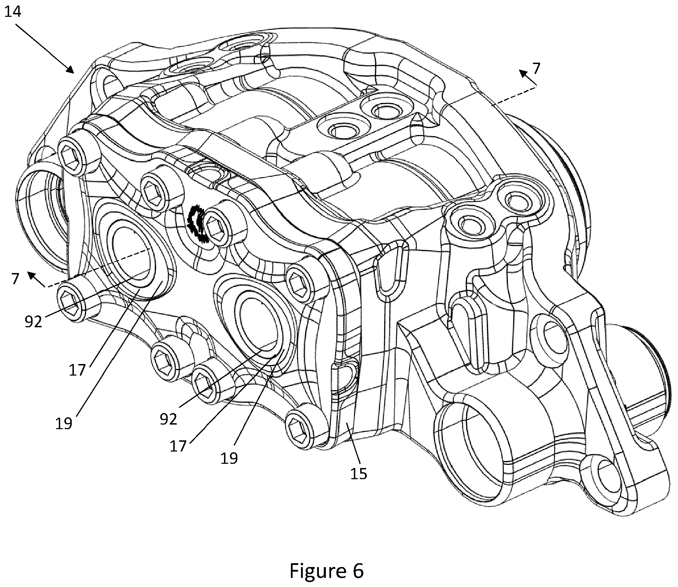

In the released condition, as shown in Figure 4, the shaft portion 92 projects from the caliper housing 14. More specifically, the caliper housing 14 has a cover plate 15 at its inboard end, to aid with installation of the components within the caliper housing 14. The cover plate 15 has openings 17 configured to align with the caliper bores 34 of the caliper housing 14. In this embodiment, each opening 17 is substantially circular. Each opening 17 is surrounded by a substantially planar surface 19, shown most clearly in Figures 3 and 6. The planar surface 19 makes it easier for a user to see whether the shaft portions 92 are projecting from the openings 17 or not.

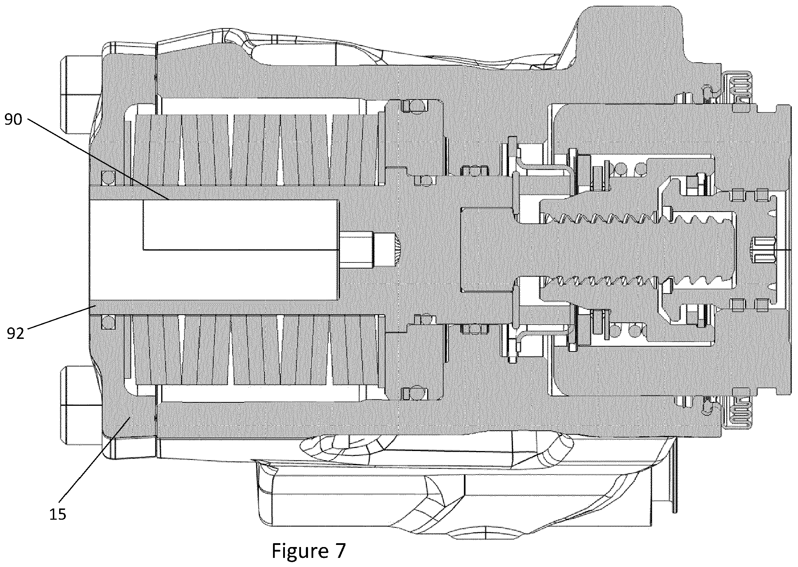

In the applied condition, as can be seen most clearly in Figures 6 and 7, the shaft portions 92 are flush with the planar surfaces 19. Therefore, from a quick visual inspection, a user can see that the parking brake arrangement 32 is in the applied condition.

Accordingly, in this embodiment, each parking brake piston 90 is the parking brake indicator. Specifically, the shaft portions 92 of the parking brake pistons 90 act as parking brake indicators. As can be seen, the parking brake indicators are located on a rear side of the caliper housing, opposite to a front side of the caliper housing that faces the brake rotor. Such a location is typically unobstructed when the brake is installed on a vehicle, so it is easy for the user to inspect the brake and see the parking brake indicator. It is easy for a user to determine whether the parking brake indicator is projecting from the bore or not. Therefore, this is a simple way to indicate whether the disc brake 10 is functioning correctly or not, as well as helping them to immediately diagnose any issues. For example, if the parking brake arrangement 32 is supposed to be in the applied condition but at least one shaft portion 92 is not flush with the planar surfaces 19 of the cover plate 15, this could indicate that there is a problem with the parking brake arrangement 32. Conversely, if the parking brake arrangement 32 is supposed to be in the released condition but at least one shaft portion 92 does not project from the planar surfaces 19 of the cover plate 15, this could indicate that there is a problem with the hydraulic system that releases the parking brake arrangement 32 and the parking brake arrangement 32 is still in the applied condition. Having the parking brake indicator being the parking brake piston 90 is simple and space saving as no further components are required. However, it will be appreciated that in other embodiments, the parking brake indicator could be an alternative component which is simply in communication with the parking brake arrangement 90, to indicate whether it is in the applied condition or the released condition.

The collar portion 94 also has an axially inboard engaging surface that is acted upon by the biasing arrangement 118. At its outboard end, the collar portion 94 also has an axially outboard engaging surface that helps define the hydraulic chamber 108. The collar portion 94 is keyed to the shaft portion 92 of the parking piston 90 such that when the pressure in the hydraulic chamber 108 is increased as it is filled up with hydraulic fluid, the parking piston 90 is moved in a direction away from the first brake pad 22.

In this embodiment, the biasing arrangement 118 includes a plurality of biasing elements. The biasing elements are located on the shaft portion 92 of the parking brake piston 90 and are configured to act on the collar portion 94 of the parking brake piston 90 to urge in in the outboard direction. In this embodiment, the biasing elements are Belville washers 122. In this embodiment, each Bellville washer 122 has a central aperture so they can locate on the shaft portion 92 of the parking brake piston 90. The function of Belville washers is known so will not be described in detail, but when the parking brake piston 90 is released by hydraulic fluid being evacuated from the hydraulic chamber 108, the Belville washers 122 expand axially and act on the axially inboard engaging surface of the collar portion 94 to urge the parking brake piston 90 in the outboard direction, to apply force to the inboard-facing surface of the head portion 72 of the adjuster screw 68.

The axially outboard engaging surface of the collar portion 94 of the parking brake piston 90 engages the head portion 72 of the adjuster screw 68 and urges the adjuster screw 68 in the outboard direction. Due to the threaded contact between the adjuster screw 68 and the adjuster nut 80, the adjuster nut 80 is also moved in the outboard direction. The outboard-facing surface of the adjuster nut flange portion 82 contacts the inboard-facing surface of the outer service piston 38 at the clutch face 42. The adjuster screw 68 cannot rotate due to the corresponding profiles of the adjuster screw 68 and the adjuster screw retainer 74. The adjuster nut 80 cannot rotate due to the contact between the adjuster nut flange portion 82 and the outer service piston 38 at the clutch face 42. Therefore, the outer service piston 38 is urged towards the rotor 20. The outer service piston 38 contacts the backplate 26 of the first brake pad 22 and urges it into contact with the rotor 20. Once the friction material 28 of the first brake pad 22 and the second brake pad 24 are in contact with the rotor 20, the rotor 20 can no longer rotate, the wheel is considered locked and the vehicle is considered parked.

After a parking operation, in this embodiment, retraction of the parking brake piston 90 is caused by the re-introduction of hydraulic fluid into the hydraulic chamber 108. The re-introduction of hydraulic fluid could be done by, for example, the operator of the vehicle depressing the brake pedal. The parking brake piston 90 is held in place in the released condition once the parking brake piston 90 has been retracted. For example, the operator of the vehicle could activate the electronic parking brake control again to signal the end of the parking operation, after they have depressed the brake pedal.

When the distance between the friction material 28 of the first brake pad 22 and the rotor 20 is too great, due to wear of the brake pads and rotor, an adjustment operation is required to move the first brake pad 22 closer to the rotor 20. For the service brake arrangement 30, the primary piston seal 44 achieves this. Every time the outer service piston 38 is actuated due to hydraulic pressure in the hydraulic chamber 36, the outer service piston 38 is moved towards the rotor 20. After the braking operation, when the hydraulic pressure is released, the outer service piston 38 is retracted due to the frictional contact and 'springiness' of the primary piston seal 44. Accordingly, the primary piston seal 44 can be configured to retract the primary piston seal 44 by a consistent axial distance after every braking operation. In this way, the distance between the outer service piston 38 and the rotor 20 remains consistent as the brake pads and rotor wears.

As for the parking brake arrangement 32, when the disc brake 10 is applied, the pressure of the hydraulic fluid in the hydraulic chamber 36 exerts a load on the adjuster nut 80 and holds it against the outer service piston 38 at the clutch face 42. If adjustment is required, the backlash between the threaded part of the adjuster screw 68 and the adjuster nut 80 is taken up and the flanks of the helixes contact one another. The outer service piston 38 continues to move outwardly, relieving the contact at the clutch face 42. Simultaneously, the adjuster nut spring 86 is also compressed by the hydraulic pressure, and the adjuster nut 80 is caused to rotate relative to the adjuster screw 68, moving the adjuster nut 80 axially outboard relative to the adjuster screw 68 and extending the overall axial length of the adjuster screw 68 and adjuster nut 80 combination.

A relatively low hydraulic fluid pressure is required to move the outer service piston 38 towards the rotor 20. However, if the gap between the outer service piston 38 and the rotor 20 is too high, the hydraulic fluid pressure will increase. At a higher hydraulic fluid pressure, the inner service piston 40 is urged in an axially outboard direction. Via the flange portion 54 of the inner service piston 40 and the low friction washer 58, the adjuster nut 80 is also moved in an axially outboard direction and brought back into contact with the outer service piston 38 at the clutch face 42. The frictional contact at the clutch face 42 between the adjuster nut 80 and the outer service piston 38 prevents any further rotation of the adjuster nut 80. As the adjuster nut 80 and the adjuster screw 68 cannot rotate, any further increase in hydraulic fluid pressure urges the adjuster screw 68 outwardly without further adjustment taking place. When the disc brake 10 is released, the adjuster screw 68 is moved in an axially inboard direction to its rest position and the primary piston seal 44 retracts the outer service piston 38.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A hydraulic disc brake for a vehicle, the disc brake comprising:
a service brake arrangement configured to actuate under hydraulic pressure to urge a brake pad towards a rotor to apply the disc brake during a braking operation;
a parking brake arrangement configured to urge the brake pad towards the rotor to apply the disc brake during a parking operation, wherein the parking brake arrangement has an applied condition and a released condition; and
a parking brake indicator configured to indicate whether the parking brake arrangement is in the applied condition or the released condition.

2. The hydraulic disc brake of claim 1, wherein the disc brake comprises a caliper housing for locating the service brake arrangement and the parking brake arrangement, wherein the parking brake indicator is located on a rear side of the caliper housing, opposite to a front side of the caliper housing that faces the brake rotor.

3. The hydraulic disc brake of claim 2, wherein the caliper housing comprises at least one bore to locate the parking brake mechanism and the parking brake indicator, wherein in the released condition, the parking brake indicator projects from the bore.

4. The hydraulic disc brake of claim 3, wherein the parking brake arrangement comprises a parking brake piston configured to urge the brake pad towards the rotor to apply the disc brake during a parking operation, wherein the parking brake indicator is the parking brake piston.

5. The hydraulic disc brake of claim 4, wherein the service piston has a central longitudinal axis and the parking brake piston is co-axial with the service piston.

6. The hydraulic disc brake of claim 5, wherein the parking brake arrangement further comprises a biasing arrangement configured to bias the parking brake piston in the direction of the brake pad when the parking brake arrangement is in the applied condition.

7. The hydraulic disc brake of claim 6, wherein the parking brake arrangement is configured to be moved to the released condition by hydraulic pressure.

8. The hydraulic disc brake of claim 7, wherein the bore in the caliper housing comprises a hydraulic fluid chamber, wherein in the applied condition of the parking brake arrangement the hydraulic fluid chamber is substantially empty and in the released condition of the parking brake arrangement the hydraulic fluid chamber is substantially filled with hydraulic fluid.

9. The hydraulic disc brake of claim 8, wherein the parking piston comprises a circumferential collar portion, wherein a radial rotor-facing surface of the collar portion partially defines the hydraulic fluid chamber and is configured to be acted on by the hydraulic fluid and an opposite radial surface of the collar portion faces away from the rotor and is configured to be in contact with the biasing arrangement.

10. The hydraulic disc brake of claim 9, wherein the caliper housing further comprises a cover plate at its rear side, wherein the bore passes through the cover plate and the parking brake piston is substantially flush with the cover plate when it is in the applied condition.

11. The hydraulic disc brake of claim 10, wherein the cover plate has a substantially planar surface portion, and the bore passes through this portion.

12. The hydraulic disc brake of claim 11, wherein the parking brake piston is at least partially surrounded by the biasing arrangement, wherein the parking brake piston comprises a shoulder portion engaged by the biasing arrangement.

13. The hydraulic disc brake of claim 12, wherein the biasing arrangement comprises a housing having a plurality of biasing elements, optionally wherein the biasing elements are Belville washers.

14. The hydraulic disc brake of claim 13, wherein the parking brake piston has a shaft portion and the biasing elements are located on the shaft portion and at least one of the biasing elements engages the shoulder portion of the parking brake piston.

15. The hydraulic disc brake of claim 14, wherein the parking brake arrangement comprises an adjustment mechanism to account for wear of the rotor and brake pad, wherein the adjustment mechanism comprises an adjuster nut that is configured to contact the service piston, the adjuster nut being extendable relative to an adjuster screw, wherein the parking brake piston is configured to, during the parking operation, engage the adjuster screw when released by the retaining arrangement, in order to transfer force from the biasing arrangement to the adjuster nut, which transfers the force to the service piston to apply the disc brake.
